# EUROPÄISCHE PATENTSCHRIFT

(11) **EP 0 988 654 B1**
(45) Veröffentlichungstag und Bekanntmachung des Hinweises auf die Patenterteilung: **09.01.2002**
(21) Anmeldenummer: 98929338.6
(22) Anmeldetag: 19.05.1998
(51) Int. Cl.: H01M 4/88, H01M 4/86, H01M 8/14

(54) **DOPPELSCHICHTKATHODE FÜR SCHMELZKARBONATBRENNSTOFFZELLEN UND VERFAHREN ZUR HERSTELLUNG EINER SOLCHEN**
DOUBLE LAYER CATHODE FOR MOLTEN CARBONATE FUEL CELLS AND METHOD FOR PRODUCING THE SAME
CATHODE A DOUBLE COUCHE POUR PILES A COMBUSTIBLE A CARBONATE FONDU ET SON PROCEDE DE FABRICATION

(30) Priorität: 23.05.1997 DE 19721546
(43) Veröffentlichungstag der Anmeldung: 29.03.2000
(73) Patentinhaber: MTU Friedrichshafen GmbH, 88040 Friedrichshafen (DE)
(72) Erfinder: PROHASKA, Armin, D-89584 Ehingen (DE); ROHLAND, Bernd, D-89081 Ulm (DE); BISCHOFF, Manfred, D-83620 Feldkirchen (DE); PLZAK, Vojtech, D-73207 Plochingen (DE)
(74) Vertreter: Winter, Josef
(86) Internationale Anmeldenummer: EP9802929
(87) Internationale Veröffentlichungsnummer: WO9853513

(56) Entgegenhaltungen:
- EP-A- 0 061 775
- WO-A-94/18713
- WO-A-97/28571
- DE-A- 19 620 504
- CHEMICAL ABSTRACTS, vol. 122, no. 16, 17. April 1995 Columbus, Ohio, US; abstract no. 192478, NIRASAWA, HITOSHI ET AL: "Molten carbonate fuel cells with improved short circuiting prevention" XP002078590 -& JP 06 325778 A (TOKYO SHIBAURA ELECTRIC CO., JAPAN) -& PATENT ABSTRACTS OF JAPAN vol. 95, no. 2, 31. März 1995 & JP 06 325778 A (TOSHIBA CORP), 25. November 1994 -& DATABASE WPI Derwent Publications Ltd., London, GB; AN 95-046522 XP002078592 A
- CHEMICAL ABSTRACTS, vol. 118, no. 16, 19. April 1993 Columbus, Ohio, US; abstract no. 150985, FUCHINO, SEIJI ET AL: "Lithium cobalt oxide cathode-active mass for secondary batteries" XP002078591 -& JP 04 223053 A (MITSUI MINING AND SMELTING CO., LTD., JAPAN) -& PATENT ABSTRACTS OF JAPAN vol. 16, no. 574 (E-1298) & JP 04 223053 A (MITSUI MINING AND SMELTING CO), 12. August 1992

## Beschreibung

Die Erfindung betrifft eine Doppelschichtkathode für Schmelzkarbonatbrennstoffzellen und ein Verfahren zur Herstellung einer solchen.

Derzeit werden für Schmelzkarbonatbrennstoffzellen Kathoden aus porösem Nickeloxid verwendet, die mit Lithium dotiert sind. Weil der elektrische Widerstand von Nickeloxid verhältnismäßig gering ist, (0,05 Ohm × cm) und dessen elektrokatalytische Aktivität hoch ist (Austauschstromdichte 0,8 mA/cm²), ergeben solche aus Nickeloxid hergestellte Kathoden eine gute Zelleistung. Wegen des geringen Widerstands kann die Kathode zudem ausreichend dick hergestellt werden, zirka 1 mm, so daß eine gleichmäßige Gasverteilung gewährleistet ist. Ein Nachteil von aus Nickeloxid hergestellten Kathoden besteht jedoch darin, daß sie keine ausreichend hohe Korrosionsbeständigkeit aufweisen.

Bei aus Nickeloxid hergestellten Kathoden geht an der aus einem LiAlO₂-Trägermaterial und einem Elektrolytmaterial hergestellten Elektrolytmatrix, an der die Kathode und die Anode der Brennstoffzelle angeordnet sind, Nickeloxid in Lösung; Nickel wird in die Elektrolytmatrix transportiert und scheidet sich dort als metallisches Nickel ab. Dies führt im Laufe der Zeit zu einem innerlichen Kurzschluß der Zelle. Die Auflösungs- und Abscheiderate des Nickeloxids beträgt 2 bis 4 Mikrogramm pro Stunde und Quadratzentimeter, wodurch die Lebensdauer der Brennstoffzelle auf etwa 10000 Stunden begrenzt ist. Für eine wirtschaftliche Nutzung der Brennstoffzellentechnologie ist jedoch eine Lebensdauer von mindestens 40000 Stunden Voraussetzung.

Da weiterhin die Löslichkeit des Nickeloxids in dem Elektrolytmaterial der Elektrolytmatrix mit steigendem Kohlendioxid- Partialdruck linear zunimmt, ist der wirtschaftlich besonders interessante Druckbetrieb bei Schmelzkarbonatbrennstoffzellen mit Kathoden aus Nickeloxid ausgeschlossen.

Weiterhin sind auch Lithiumcobaltit/Nickeloxid-Doppelschicht-Kathoden bekannt, welche in der Brennstoffzelle so angeordnet sind, daß die Lithiumcobaltitschicht der Elektrolytmatrix zugewandt und die Nickeloxidschicht derselben abgewandt ist. Diese ermöglichen es aufgrund der Zwischenschaltung der Lithiumcobaltitschicht, die Nickelabscheiderate in der Elektrolytmatrix auf weniger als 0,4 Mikrogramm pro Stunde und Quadratzentimeter zu senken und damit die Lebensdauer der Schmelzkarbonatbrennstoffzelle auf den oben genannten geforderten Wert zu verlängern. Der Nachteil von solchen herkömmlichen Lithiumcobaltit/Nickeloxid-Doppelschichtkathoden ist jedoch eine erhöhte Temperaturabhängigkeit des Polarisationswiderstandes, was bei einem praktischen Betrieb von Schmelzkarbonatbrennstoffzellen, welcher Temperaturschwankungen zwischen etwa 600°C bis 680°C beinhaltet, größere Schwankungen in der Brennstoffzellenleistung hervorruft. Außerdem ist es mit dieser Art von Doppelschichtkathoden schwierig, die mittlere Betriebstemperatur der Brennstoffzellen auf eine Temperatur von weniger als 650°C zu senken, weil dann die Leistung bzw. der Wirkungsgrad soweit absinkt, daß kein effektiver wärmegeführter Betrieb durchgeführt werden kann. Aber gerade das Absenken der mittleren Betriebstemperatur ist nötig, um die Heißkorrosion der aus Stahl gefertigten Stromkollektoren (Bipolarplatten) soweit zu verringern, daß mit dem gesamten eine größere Anzahl von Brennstoffzellen, zum Beispiel 100 Einzelzellen, enthaltenden Brennstoffzellenstapel die gewünschten 40000 Stunden Betriebszeit erreicht werden können.

Aus der DE 44 40 696 A1 gehen Doppelschichtkathoden als bekannt hervor, die eine Schicht auf der Basis von Kobalt und eine Schicht aus Nickeloxid aufweisen.

In der DE 42 41 266 Cl sind Kathodenmaterialien dargestellt, die durch Mischfällung von Kobalt- und Erdalkalisalzen herstellt werden, wobei Mischoxide gebildet werden und eine Zugabe von pulverformigem Lithiumoxid mit anschließender Sinterung erfolgt.

Aus dem Abstrakt der japanischen Patentanmeldung in Derwent zur JP 09092294 A ist zu entnehmen, daß zweischichtige Elektroden mit einer ersten Schicht aus Kobaltoxid und Ceroxid und einer zweiten Schicht aus Nickel bekannt sind.

Aus dem Abstrakt der japanischen Patentanmeldung in Derwent zur JP 05266892 A gehen Elektrodenmaterialien als bekannt hervor, die durch thermische Behandlung von Mischungen aus wässrigen Kobaltlösungen und Ceroxid enthaltenden Suspensionen hervorgehen.

Die Aufgabe der Erfindung ist es daher eine Kathode für eine Schmelzkarbonatbrennstoffzelle anzugeben, die eine höhere Lebensdauer und eine geringere Temperaturabhängigkeit aufweist.

Diese Aufgabe wird durch ein Verfahren zur Herstellung einer Doppelschichtkathode für Schmelzkarbonatbrennstoffzellen mit den Merkmalen des Anspruchs 1 gelöst. Gemäß der Erfindung ist es vorgesehen, daß bei einem solchen Verfahren aus einem ersten Kathodenmaterial eine erste Kathodenschicht gebildet wird; ein zweites Kathodenmaterial wird hergestellt, indem Cobaltoxid mittels Ko-Prezipitation mit Cer aktiviert und mit Lithiumkarbonat zu einer Suspension verarbeitet wird; die Suspension des zweiten Kathodenmaterials wird als zweite Kathodenschicht auf die erste Kathodenschicht aufgebracht und getrocknet; und das aus den beiden Kathodenschichten hergestellte Gebilde wird bei erhöhter Temperatur gesintert.

Durch die Erfindung wird somit eine mittels Cer katalytisch aktivierte Doppelschichtkathode für Schmelzkarbonatbrennstoffzellen geschaffen, die eine wesentlich verlängerte Lebensdauer aufweist. Ein wesentlicher Vorteil der nach dem erfindungsgemäßen Verfahren hergestellten Doppelschichtkathode ist es, daß deren Polarisationswiderstand eine geringere Temperaturabhängigkeit aufweist und damit die Brennstoffzelle auch bei einer unter 650°C abgesenkten Betriebstemperatur eine höhere Leistung aufweist, als es bei einer herkömmlichen Doppelschichtkathode der Fall ist.

Das Material der ersten Kathodenschicht besteht vorteilhafterweise auf Nickel.

Vorteilhafterweise wird zur Herstellung des zweiten Kathodenmaterials Lithiumkarbonat in stöchiometrischer Menge zu dem Cobaltoxid hinzugefügt.

Vorteilhafterweise wird die Suspension des zweiten Kathodenmaterials beim Sintern zu Lithiumcobaltit umgewandelt.

Vorteilhafterweise erfolgt das Sintern bei einer Temperatur zwischen 500 und 700°C.

Vorzuziehen ist das Sintern bei einer Temperatur zwischen 550 und 650°C, insbesondere bei einer Temperatur von 600°C.

Vorteilhafterweise wird die Suspension des zweiten Kathodenmaterials in einer Schicht mit einer Dicke von 50 bis 200 µm aufgebracht. Besonders vorteilhaft ist das Aufbringen der Schicht in einer Dicke zwischen 80 und 150 µm.

Gemäß einer Weiterbildung des erfindungsgemäßen Verfahrens ist es vorgesehen, daß die Ko-Prezipitation des Cobaltoxids durch Mischfällung von Cer(III)Nitrat/Zirkonylnitrat/Yttriumnitrat/Cobaltnitrat-Lösung erfolgt. Dadurch wird in der Lithiumcobaltitschicht eine Aktivierung mit Cer-Zirkon-Yttrium-Mischoxid ermöglicht, wodurch eine weitere Verringerung des Absolutwertes des Polarisationswiderstandes der gemäß dem erfindungsgemäßen Verfahren hergestellten Kathode erreicht wird.

Besonders von Vorteil ist es bei der gemäß dem erfindungsgemäßen Verfahren hergestellten Doppelschichtkathode, daß beim Anfahren der mit den Doppelschichtkathoden betriebsfertig montierten Brennstoffzellen das in dem zweiten Material enthaltene Cobalt zu Cobaltoxid oxidiert wird und sich mit dem Lithiumkarbonat zu mit Ceroxid dotiertem Lithiumcobaltit umsetzt, und das Nickel des ersten Kathodenmaterials zu Nickeloxid oxidiert und lithiiert wird. Somit wird bei dem Anfahren der Brennstoffzellen der gemäß den erfindungsgemäßen Verfahren hergestellte Kathodenrohling in seine endgültige Form gebracht.

Weiterhin wird die gestellte Aufgabe gemäß der Erfindung gelöst durch eine Doppelschichtkathode für Schmelzkarbonatbrennstoffzellen, welche dadurch gekennzeichnet ist, daß die Kathode eine aus einem ersten Kathodenmaterial bestehende erste Schicht und eine aus Cer-aktiviertem Lithiumcobaltit bestehende zweite Schicht enthält. Der Vorteil der erfindungsgemäßen Doppelschichtkathode ist eine längere Lebensdauer als herkömmliche Kathoden für Schmelzkarbonatbrennstoffzellen und eine geringere Temperaturabhängigkeit des Polarisationswiderstand gegenüber herkömmlichen Lithium-Cobaltit-Nickeloxid-Doppelschichtkathoden.

Das erste Kathodenmaterial ist vorzugsweise lithiiertes Nickeloxid.

Gemäß einer Weiterbildung der Erfindung ist es vorgesehen, daß die Cer-aktivierte Lithiumcobaltitschicht der erfindungsgemäßen Doppelschichtkathode mit Cer/Zirkon/Yttrium-Mischoxid aktiviert ist. Der Vorteil hiervon ist eine weitere Verringerung des Absolutwerts des Polarisationswiderstandes der erfindungsgemäßen Doppelschichtkathode.

Im folgenden werden Ausführungsbeispiele der Erfindung anhand der Zeichnung erläutert.
Es zeigen:
- Figur 1: eine perspektivische Explosionsansicht, welche die wesentlichen Bestandteile einer Schmelzkarbonatbrennstoffzelle zeigt, bei welcher die erfindungsgemäße Doppelschichtkathode Verwendung findet; und
- Figur 2: eine vergrößerte Schnittansicht durch einen Teil einer erfindungsgemäßen Doppelschichtkathode, wie sie bei der in Figur 1 dargestellten Brennstoffzelle Verwendung findet.

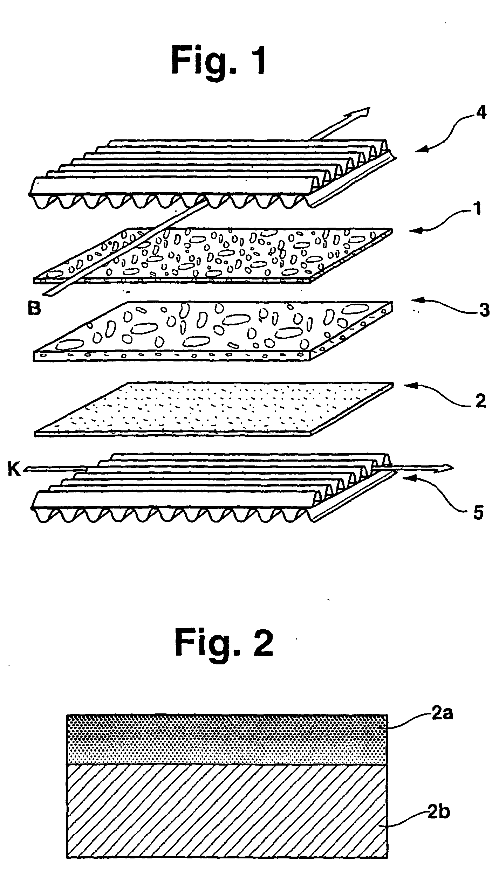

Bei der in Figur 1 gezeigten Brennstoffzelle ist zwischen einer Anode 1 und einer Kathode 2 eine Elektrolytmatrix 3 angeordnet, die aus einem LiAlO₂-Trägermaterial und einem Elektrolytmaterial hergestellt ist. Sowohl an der Anode 1 wie auch an der Kathode 2 sind jeweils Bipolarplatten 4,5 angeordnet, die die Aufgabe von Stromkollektoren haben und weiterhin dazu dienen, einen Gasraum zur Verfügung zu stellen, in welchem das Brenngas B für die Anode 1 und das Kathodengas K für die Kathode 2 an den jeweiligen Elektroden vorbeigeführt wird.

Der in Figur 2 vergrößert gezeigte Ausschnitt zeigt einen Querschnitt durch die Kathode 2 der Brennstoffzelle. Diese Kathode besteht aus zwei Schichten, nämlich einer ersten Schicht 2a und einer zweiten Schicht 2b. Die erste Schicht 2a besteht aus porösem lithiiertem Nickeloxid und ist der Elektrolytmatrix 3 abgewandt. Die zweite Schicht 2b besteht aus porösem Cer-aktiviertem Lithiumcobaltit und ist der Elektrolytmatrix 3 zugewandt. Die erste Schicht 2a aus Nickeloxid weist eine gute elektronische Leitfähigkeit auf, während die zweite Schicht 2b aus Lithiumcobaltit eine geringe Temperaturabhängigkeit des Polarisationswiderstands aufweist und dafür sorgt, daß die Abscheiderate des Nickeloxids in der Elektrolytmatrix 3 gering ist.

Alternativ kann die zweite Schicht 2b aus porösem Cer-aktiviertem Lithiumcobaltit bestehen, das mit Cer/Zirkon/Yttrium-Mischoxid aktiviert ist.

Gemäß einem Ausführungsbeispiel des erfindungsgemäßen Verfahrens wird zur Herstellung der Doppelschichtkathode die erste Kathodenschicht 2a aus Nickel hergestellt. Zur Herstellung der zweiten Kathodenschicht 2b wird ein zweites Kathodenmaterial gebildet, indem Cobaltoxid mittels Ko-Prezipitation mit Cer aktiviert und mit Lithiumkarbonat zu einer Suspension verarbeitet wird. Die Suspension des zweiten Kathodenmaterials wird als zweite Kathodenschicht 2b auf die erste Kathodenschicht 2a aufgebracht und getrocknet. Das aus den beiden Kathodenschichten hergestellte Gebilde wird bei erhöhter Temperatur gesintert.

### Beispiel 1

Die Lithiumcobaltitschicht 2b der Kathode wird aus mittels Ko-Prezipitation mit Cer aktiviertem Cobaltoxid hergestellt. Dazu wird dieses zu einer Suspension mit stöchiometrischer Menge Lithiumkarbonat verarbeitet und auf die grüne Nickel-Basisfolie 2a als dünne Schicht mit einer Dicke von 50 bis 200 µm aufgebracht. Nach dem Trocknen wird das so hergestellte Gebilde in einer reduzierenden Atmosphäre bei 600°C zu einer porösen Nickel/Cobaltlithiumkarbonat-Platte gesintert.

### Beispiel 2

Zur Herstellung der Doppelschichtkathode wird gleichermaßen vorgegangen, mit der Ausnahme, daß die Ko-Prezipitation des mit Cer aktiviertem Cobaltoxids durch Mischfällung aus Cer(III)Nitrat/Zirkonylnitrat/Yttriumnitrat/Cobaltnitrat-Lösung vorgenommen wird. Somit wird eine Doppelschichtkathode mit einer zweiten Kathodenschicht 2b erhalten, die eine Cer/Zirkon/Yttriumoxid-Dotierung der Lithiumcobaltitschicht aufweist.

### Beispiel 3

Zur Herstellung des Materials für die zweite Kathodenschicht 2b wird Cobaltnitratlösung und Cer(IV)-Amoniumnitrat-Lösung zusammen mit Natriumcarbonatlösung bei einem pH-Wert von 8 ineinander laufen gelassen, so daß eine Cobaltoxidhydrat/Ceroxid-hydrat-Mischfällung mit großer Oberfläche entsteht. Diese wird filtriert, getrocknet und bei 400°C kalziniert. Das entstehende Oxidpulver wird mit zum Cobaltoxid stöchiometrischer Menge Lithiumkarbonatpulver gemischt und mit Bindemittel und Isopropanol in einem Ultratourenmischer zu einer ziehfähigen Suspension verarbeitet. Diese wird nach dem Doctor-Blade-Verfahren auf ein der Herstellung der ersten Kathodenschicht 2a dienendes grünes Nickelbasisband als eine 50 bis 200 µm dünne Schicht aufgebracht, so daß eine grüne Nickel/Cobaltoxid/Ceroxid-Doppelschicht entsteht. Diese Doppelschicht wird luftgetrocknet und bei 600°C in einer reduzierenden N₂-H₂-CO₂-Gasatmosphäre zu einem porösem metallischen Kathodenvormaterial aus Nickel/Ceroxid/Cobalt gesintert.

Bei der Montage der Brennstoffzellen wird die mit Li/K-Karbonat gefüllte Anode 1, die Elektrolytmatrix 3 und die noch in einem Vormaterial bestehende Doppelschichtkathode 2 mit den Stromkollektoren bzw. Bipolarplatten 4,5 zusammengesetzt. Bei einem spezifischen Anheizvorgang wird das Cobalt des Kathodenvormaterials zu Cobaltoxid oxidiert und setzt sich mit dem Lithiumkarbonat zu mit Ceroxid dotiertem Lithiumcobaltit um. Das Nickel wird dabei zu Nickeloxid oxidiert und lithiiert.

Die gemäß der Erfindung hergestellte Betriebsform der Cer-aktivierten Doppelschichtkathode weist bei Normal-Druckbetrieb einen geringeren Polarisationswiderstand als die unaktivierte Doppelschichtkathode auf und ist besonders für Betrieb bei erhöhtem Druck und Betriebstemperaturen und 650°C geeignet.

## Patentansprüche

1. Verfahren zur Herstellung von Doppelschichtkathoden-Vorläuferplatten für Schmelzkarbonatbrennstoffzellen, **dadurch gekennzeichnet,**
**daß** aus einem ersten Kathodenmaterial eine erste Kathodenschicht (2a) gebildet wird, daß ein zweites Kathodenmaterial hergestellt wird, indem mit Cer aktiviertes Cobaltoxid mittels Ko-Prezipitation aus Salzlösungen erzeugt und mit Lithiumkarbonat zu einer Suspension verarbeitet wird, daß die Suspension des zweiten Kathodenmaterials als zweite Kathodenschicht (2b) auf die erste Kathodenschicht (2a) aufgebracht und getrocknet wird, und
**daß** das aus den beiden Kathodenschichten (2a,2b) hergestellte Gebilde reduzierend bei 500°C bis 700°C zu Doppelschichtkathoden-Vorläuferplatten gesintert wird.

2. Verfahren nach Anspruch 1, **dadurch gekennzeichnet, daß** die erste Schicht (2a) aus Nickel hergestellt wird.

3. Verfahren nach Anspruch 1 oder 2, **dadurch gekennzeichnet, daß** zur Herstellung des zweiten Kathodenmaterials Lithiumkarbonat in zur Bildung von Lithiumkobaltit erforderlicher stöchiometrischer Menge zu dem mit Cer aktivierten Cobaltoxid hinzugefügt wird.

4. Verfahren nach Anspruch 1, 2 oder 3, **dadurch gekennzeichnet, daß** beim reduzierenden Sintern Kobalt entsteht.

5. Verfahren nach Anspruch 1, 2, 3 oder 4, **dadurch gekennzeichnet, daß** das Sintern bei einer Temperatur zwischen 550 und 650°C erfolgt.

6. Verfahren nach Anspruch 5, **dadurch gekennzeichnet, daß** das Sintern bei einer Temperatur von 600°C erfolgt.

7. Verfahren nach einem der Ansprüche 1 bis 6, **dadurch gekennzeichnet, daß** die Suspension des zweiten Kathodenmaterials in einer Schicht mit einer Dicke von 50 bis 200 µm aufgebracht wird.

8. Verfahren nach Anspruch 7, **dadurch gekennzeichnet, daß** die Dicke der Schicht zwischen 80 und 150 µm beträgt.

9. Verfahren nach einem der Ansprüche 1 bis 8, **dadurch gekennzeichnet, daß** die Ko-Prezipitation des Cobaltoxids durch Mischfällung von Cer(III)Nitrat/Zirkonylnitrat/Yttriumnitrat/Cobaltnitrat-Lösung erfolgt.

10. Verwendung der nach dem Verfahren nach einem oder mehrerer der Ansprüche 1 bis 9 hergestellten Doppelschichtkathoden-Vorläuferplatten zur Herstellung von Doppelschichtkathoden, **dadurch gekennzeichnet, daß** beim Anfahren der mit den Doppelschichtkathoden-Vorläuferplatten betriebsfertig montierten Brennstoffzellen das in dem zweiten Kathodenmaterial enthaltene Cobalt zu Cobaltoxid oxidiert wird und sich mit dem Lithiumkarbonat zu mit Ceroxid dotiertem Lithiumcobaltit umsetzt, und das Nickel des ersten Kathodenmaterials zu Nickeloxid oxidiert und von der Lithium/Kaliumkarbonatschmelze lithiiert wird.

11. Doppelschichtkathode für Schmelzkarbonatbrennstoffzellen, **dadurch gekennzeichnet, daß** die Kathode eine aus einem ersten Kathodenmaterial bestehende erste Schicht (2a) und eine aus Cer-aktiviertem Lithiumcobaltit bestehende zweite Schicht (2b) enthält.

12. Doppelschichtkathode nach Anspruch 11, **dadurch gekennzeichnet, daß** das erste Kathodenmaterial lithiiertes Nickeloxid ist.

13. Doppelschichtkathode nach Anspruch 1 oder 12, **dadurch gekennzeichnet, daß** die Cer-aktivierte Lithiumcobaltitschicht mit Cer/Zirkon/Yttrium-Mischoxid aktiviert ist.

## Claims

1. Process for producing double-layer cathode precursor plates for molten carbonate fuel cells, **characterized in that** a first cathode layer (2a) is formed from a first cathode material, **in that** a second cathode material is produced by generating cerium-activated cobalt oxide by means of coprecipitation from salt solutions and processing it to form a suspension with lithium carbonate, **in that** the suspension of the second cathode material is applied as a second cathode layer (2b) to the first cathode layer (2a) and is dried, and **in that** the structure which is formed from the two cathode layers (2a, 2b) is sintered under reducing conditions at 500°C to 700°C to form double-layer cathode precursor plates.

2. Process according to Claim 1, **characterized in that** the first layer (2a) is produced from nickel.

3. Process according to Claim 1 or 2, **characterized in that** to produce the second cathode material, lithium carbonate is added to the cerium-activated cobalt oxide in the stoichiometric quantity which is required to form lithium cobaltite.

4. Process according to Claim 1, 2 or 3, **characterized in that** cobalt is formed during the reducing sintering.

5. Process according to Claim 1, 2, 3 or 4, **characterized in that** the sintering takes place at a temperature of between 550 and 650°C.

6. Process according to Claim 5, **characterized in that** the sintering takes place at a temperature of 600°C.

7. Process according to one of Claims 1 to 6, **characterized in that** the suspension of the second cathode material is applied in a layer with a thickness of from 50 to 200 µm.

8. Process according to Claim 7, **characterized in that** the thickness of the layer is between 80 and 150 µm.

9. Process according to one of Claims 1 to 8, **characterized in that** the coprecipitation of the cobalt oxide takes place by mixed precipitation of cerium (III) nitrate/zirconyl nitrate/yttrium nitrate/cobalt nitrate solution.

10. Use of the double-layer cathode precursor plates produced using the process according to one or more of Claims 1 to 9 for producing double-layer cathodes, **characterized in that**, when the fuel cells which have been mounted ready for operation with the double-layer cathode precursor plates are started up, the cobalt contained in the second cathode material is oxidized to form cobalt oxide and reacts with the lithium carbonate to form lithium cobaltite which is doped with cerium oxide, and the nickel of the first cathode material is oxidized to form nickel oxide and is lithiated by the lithium/potassium molten carbonate.

11. Double-layer cathode for molten carbonate fuel cells, **characterized in that** the cathode includes a first layer (2a), which consists of a first cathode material, and a second layer (2b), which consists of cerium-activated lithium cobaltite.

12. Double-layer cathode according to Claim 11, **characterized in that** the first cathode material is lithiated nickel oxide.

13. Double-layer cathode according to Claim 11 or 12, **characterized in that** the cerium-activated lithium cobaltite layer is activated with cerium/zirconium/yttrium mixed oxide.

## Revendications

1. Procédé pour fabriquer des plaques précurseurs de cathode à double couche pour piles à combustible à carbonate fondu, **caractérisé en ce qu'**une première couche de cathode (2a) est formée dans un premier matériau de cathode, qu'un deuxième matériau de cathode est fabriqué en produisant de l'oxyde de cobalt activé au cérium au moyen d'une précipitation de cobalt à partir de solutions salines et en le traitant pour former une suspension, que la suspension du deuxième matériau de cathode est appliquée en tant que deuxième couche de cathode (2b) sur la première couche de cathode (2a) et séchée, et que le produit fabriqué à partir des deux couches de cathode (2a, 2b) est soumis à un frittage réducteur entre 500 °C et 700 °C pour former des plaques précurseurs de cathode à double couche.

2. Procédé selon la revendication 1, **caractérisé en ce que** la première couche (2a) est fabriquée en nickel.

3. Procédé selon la revendication 1 ou 2, **caractérisé en ce que** la quantité stoechiométrique nécessaire à la formation de cobaltite de lithium est ajoutée à l'oxyde de cobalt activé au cérium afin de fabriquer le deuxième matériau de cathode, du carbonate de lithium.

4. Procédé selon la revendication 1, 2 ou 3, **caractérisé en ce que** du cobalt est produit lors du frittage réducteur.

5. Procédé selon la revendication 1, 2, 3 ou 4 **caractérisé en ce que** le frittage est effectué à une température comprise entre 550 et 650 °C.

6. Procédé selon la revendication 5, **caractérisé en ce que** le frittage est effectué à une température de 600 °C.

7. Procédé selon l'une des revendications 1 à 6, **caractérisé en ce que** la suspension du deuxième matériau de cathode est appliquée en une couche ayant une épaisseur comprise entre 50 et 200 µm.

8. Procédé selon la revendication 7, **caractérisé en ce que** l'épaisseur de la couche est comprise entre 80 et 150 µm.

9. Procédé selon l'une des revendications 1 à 8, **caractérisé en ce que** la co-précipitation de l'oxyde de cobalt est effectuée par co-précipitation d'une solution de nitrate de cérium(III) / nitrate de zirconium / nitrate d'yttrium / nitrate de cobalt.

10. Utilisation des plaques précurseurs de cathode à double couche fabriquées selon le procédé selon une ou plusieurs des revendications 1 à 9 pour fabriquer des cathodes à double couche, **caractérisée en ce que** lors de la mise en route de la pile à combustible prête à l'emploi composée des plaques précurseurs de cathode à double couche, le cobalt contenu dans le deuxième matériau de cathode est oxydé pour former de l'oxyde de cobalt et, avec le carbonate de lithium, se transforme en cobaltite de lithium dopé à l'oxyde de cérium, et le nickel du premier matériau de cathode est oxydé pour former de l'oxyde de nickel et lithiné par la fusion lithium/carbonate de kalium.

11. Cathode à double couche pour piles à combustible, **caractérisée en ce que** la cathode comprend une première couche (2a) composée d'un premier matériau de cathode et une deuxième couche (2b) composée de cobaltite de lithium activée au cérium.

12. Cathode à double couche selon la revendication 11, **caractérisée en ce que** le premier matériau de cathode est de l'oxyde de nickel lithiné.

13. Cathode à double couche selon la revendication 11 ou 12, **caractérisée en ce que** la couche de cobaltite de lithium activée au cérium est activée avec de l'oxyde du mélange cérium / zircon / yttrium.
